Europäisches Patentamt

European Patent Office

Office européen des brevets

(19)

(11) Publication number: **0 155 018**
**A1**

# (12) EUROPEAN PATENT APPLICATION

(21) Application number: **85200133.8**

(22) Date of filing: **07.02.85**

(51) Int. Cl.⁴: **G 06 F 11/10**

(30) Priority: **08.02.84 NL 8400392**

(43) Date of publication of application: **18.09.85**
**Bulletin 85/38**

(84) Designated Contracting States: **BE DE FR GB IT SE**

(71) Applicant: **N.V. Philips' Gloeilampenfabrieken,**
**Groenewoudseweg 1, NL-5621 BA Eindhoven (NL)**

(72) Inventor: **Verheul, Hans Hendrik, c/o INT.**
**OCTROOIBUREAU B.V. Prof. Holstlaan 6, NL-5656 AA**
**Eindhoven (NL)**
Inventor: **de Wit, Martinus Petrus Paulus, c/o INT.**
**OCTROOIBUREAU B.V. Prof. Holstlaan 6, NL-5656 AA**
**Eindhoven (NL)**

(74) Representative: **Hanneman, Henri Willem Andries Maria**
**et al, INTERNATIONAAL OCTROOIBUREAU B.V. Prof.**
**Holstlaan 6, NL-5656 AA Eindhoven (NL)**

(54) **Arrangement of supervising the functions of a memory device.**

(57)     For supervising the correct operation of a memory device it
is proposed to divide this device into two or more modules (SR$_i$).
To that end the data words (DW) to be entered into the memory,
each comprising a parity bit (PB), are divided into a like number of
portions (SDW$_i$) and each portion is entered into one of the
modules (SR$_i$). Checking the parity (PC) of associated portions
(SDW$_i$) of one data word (DW) then provides information on
whether all portions have been addressed, entered, read etc.
correctly.

EP 0 155 018 A1

ACTORUM AG

"Arrangement for supervising the functions of a memory device."


The invention relates to an arrangement for supervising the functions of a memory device for storing parity bit-containing data words, each having $m$ bits $(m \geq 2)$ the arrangement comprising dividing means for dividing the data words into n $(n \geqslant 2)$ sub-data words, and the memory device comprising $n$ separate sub-memory devices each coupled to the dividing means for storing a sub-data word in each of the $n$ sub-memory devices.

It is customary to provide data words with one or a plurality of parity bits so as to render it possible to check after a processing operation has been effected on the data word (reading, writting, storing etc.) whether the operation has been effected correctly and has not led to the introduction of an error into the data word. An arrangement for checking the parts is disclosed in United States Patent 3.972.033. From the following and similar cases it has been found that this manner of checking is not fool-proof. Let it be assumed that each time a word has been entered in a register the parity of the entered word is checked. In the case that the writing operation is interrupted, the parity of each data word remaining in the register will be determined again and if its parity was correct the error will remain unnoticed. In the case of, for example, addressing followed by reading the addressed memory location, a similar incident may occur. If the addressing is incorrect, the parity of a data word which should not be there at that moment will be checked and if that parity is correct, this word will pass the parity check unnoticed.

The invention has for its object to provide an arrangement for supervising a memory device, with which the write, storage and addressing functions are supervised in a simple way. According to the invention, an arrangement of the type set forth in the opening paragraph, is characterized in that the arrangement comprises a parity checking device connected to the sub-memory devices for checking the parity of the $n$ associated sub-data words which form one data word.

As the sub-memory devices consist of (e.g. physically) separate circuits, the risk that they will make the same errors at the same time is so small as to be disregarded, so that generally
an error in the write, memory or addressing function in one of the
circuits will be detected almost without exception.

Advantageously, the sub-data words each comprise m/n
bits and each memory location of the sub-memory devices can also
contain m/n bits.

It is further advantageous for the dividing means to
comprise a register having $\underline{m}$ bit positions and for the register to
have $\underline{n}$ (groups of) outputs for the respective m/n-bits sub-data
words.

An embodiment of the invention and the advantages thereof
will now be described in greater detail by way of example with reference to the accompanying Figures. Therein

Fig. 1 is a block circuit diagram of an embodiment of the
invention; and

Fig. 2 shows a sub-memory device for use in the embodiment
shown in Fig. 1.

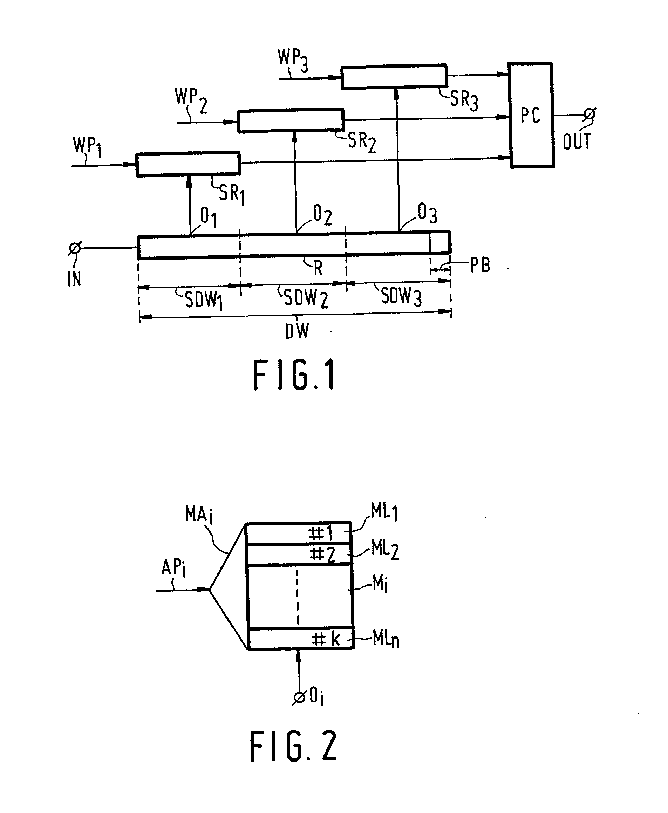

Dividing means R in Fig. 1 have an input IN for receiving
data words DW. The dividing means can more specifically be consituted
by a register having as many bit positions as there are bits in the
data words, for example $\underline{m}$ $(m \geqslant 2)$. The dividing means divide a data
word DW into a number $\underline{n}$ of sub-data words SDW. The further detailed
description of Fig. 1 is based on the assumption that an m-bit
data word is divided into 3 sub-data words each having m/3 bits,
namely $SDW_1$, $SDW_2$ and $SDW_3$. The data word DW includes a parity bit
PB which in the example shown in Fig. 1 occupies the last bit position. With the aid of the parity bit it can be checked whether
the parity of the (m-1) data bits is correct, that is to say whether
the m-bit data word contains either an even or an odd number of
"ones" or "zeroes".

The three (generally $\underline{n}$) sub-data words are transferred
to sub-registers $SR_1$, $SR_2$ and $SR_3$ $\underline{via}$ their respective outputs $O_1$,
$O_2$ and $O_3$ at an instant determined by write pulses $WP_1$, $WP_2$ and $WP_3$.
Each one of the sub-registers $SR_i$ (i = 1, 2, 3) has at least m/n
(here m/3) bit positions. The sub-registers $SR_i$ are formed by (e.g.
physically) separate, therefore independently realised circuits
and are activated by write pulses which are also generated independently of each other.

Outputs of sub-registers $SR_i$ are connected to a prior art parity checking arrangement PC, which determines whether the generated parity across the m-1 data bits (m/n from $SR_1$, m/n from $SR_2$ and (m/n) -1 from $SR_3$) corresponds to the transferred parity (last bit in $SR_3$). An output OUT of the parity checking arrangement PC supplies a signal which is indicative of whether the parity is correct or not correct.

If the recording or write function of one of the sub-registers $SR_i$ fails, this will result in the described arrangement according to the invention in a parity error, which implies that the recording and write functions are supervised by means of the parity.

Generally, the arrangement shown in Fig. 1 does not comprise sub-registers $SR_i$ each having one memory location, but comprises sub-memory devices $M_i$ which, as shown in Fig. 2, have $\underline{n}$ memory locations. The sub-data word $SDW_i$ is then entered into the memory location determined by the address decoder $MA_i$. The address decoder $MA_i$ determines this location on the basis of the applied addressing information $AP_i$.

If the recording, write or addressing function of one of the sub-memory devices $M_i$ fails, this will result in a parity error in the described arrangement according to the invention. In this way the recording, write and addressing functions are supervised by means of the parity.

The above description of the embodiment is based on the assumption that the data word is divided into sub-data words each comprising an equal number of bits, namely m/n bits. This is, however, not absolutely necessary: the invention is also suitable for use with embodiments using any other dividing mode. Obviously the number of bits which must be available per memory location in each sub-memory device must be in agreement with the selected dividing mode.

In the foregoing it was stipulated that each sub-register or each sub-memory device must be activated with a separately generated write pulse. However, it is possible to use on write pulse only, provided that this write pulse is supervised separately. This supervision may be omitted when this pulse is doubled (generally made into a multiple). The generation of the write pulses for a plurality of sub-registers or a plurality of sub-memory devices may

0155018

be combined without any objection, provided that always at least two independent write pulses are used. Advantageously, three sub-data words are formed each comprising 4 bits.

1. An arrangement for supervising the functions of a memory device for storing parity bit-containing data words, each having $m$ bits, $(m \geqslant 2)$, the arrangement comprising dividing means for dividing the data words into $n$ $(n \geqslant 2)$ sub-data words, and the memory device comprising $n$ separate sub-memory devices each coupled to the dividing means for storing a sub-data word in each of the $n$ sub-memory devices, characterized in that the arrangement further comprises a parity checking device connected to the sub-memory devices for checking the parity of the $n$ associated sub-data words which form one data word.

2. An arrangement for supervising the functions of a memory device as claimed in Claim 1, characterized in that the sub-datawords each contain m/n bits and that each memory location of the sub-memory devices can also contain m/n bits.

3. An arrangement for supervising the functions of a memory device as claimed in Claim 2, characterized in that the dividing means comprise a register having $m$ bit positions and that the register has $n$ outputs for the respective m/n-bit sub-datawords.

4. An arrangement for supervising the function of a memory device as claimed in Claim 1 or 2, characterized in that m = 12 and n = 3.

WP$_3$

SR$_3$

WP$_2$

PC

SR$_2$

OUT

WP$_1$

SR$_1$

O$_1$    O$_2$    O$_3$

IN

R    PB

SDW$_1$    SDW$_2$    SDW$_3$

DW

# FIG.1

MA$_i$    ML$_1$

#1

#2    ML$_2$

AP$_i$

M$_i$

#k    ML$_n$

O$_i$

# FIG.2

PHN 10922

European Patent Office

# EUROPEAN SEARCH REPORT

0155018
. Application number

EP 85 20 0133

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | XEROX DISCLOSURE JOURNAL, vol. 1, no. 3, March 1976, page 79, Stamford, Conn., US; R. VIERSON et al.: "Memory parity checking" * Whole document * | 1-3 | G 06 F 11/10 |
| | --- | | |
| Y | EP-A-0 080 354 (SPERRY) * Page 2, lines 1-15; page 3, line 5 - page 6, line 3; figure 1 * | 1-3 | |
| | --- | | |
| A | US-A-3 972 033 (CISLAGHI) | | |
| | ----- | | |

TECHNICAL FIELDS SEARCHED (Int. Cl.4)

G 06 F 11/10

The present search report has been drawn up for all claims

| Place of search | Date of completion of the search | Examiner |
|---|---|---|
| THE HAGUE | 13-05-1985 | GUIVOL Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82